# EUROPÄISCHE PATENTSCHRIFT

(11) **EP 1 343 396 B1**
(45) Veröffentlichungstag und Bekanntmachung des Hinweises auf die Patenterteilung: **23.12.2009**
(21) Anmeldenummer: 01989486.4
(22) Anmeldetag: 20.11.2001
(51) Int. Cl.: A44B 18/00

(54) **VERFAHREN ZUM HERSTELLEN VON HAFVERSCHLU TEILEN**
METHOD FOR PRODUCING ADHESIVE CLOSING PARTS
PROCEDE POUR PRODUIRE DES PIECES DE FERMETURE PAR ADHERENCE

(30) Priorität: 22.12.2000 DE 10065819; 14.02.2001 DE 10106705
(43) Veröffentlichungstag der Anmeldung: 17.09.2003
(73) Patentinhaber: Gottlieb Binder GmbH & Co. KG, 71088 Holzgerlingen (DE)
(72) Erfinder: SCHULTE, Axel, 71088 Holzgerlingen (DE)
(74) Vertreter: Bartels, Martin Erich Arthur
(86) Internationale Anmeldenummer: PCT/EP2001/013385
(87) Internationale Veröffentlichungsnummer: WO 2002/051277

(56) Entgegenhaltungen:
- WO-A-97/03630
- DE-A- 19 906 008
- US-A- 3 550 837
- US-A- 4 111 634
- US-A- 4 897 026
- US-A- 5 792 411

## Beschreibung

Die Erfindung bezieht sich auf ein Verfahren zum Herstellen von Haftverschlußteilen, bei dem einzelne Haftverschlußelemente aus einem Kunststoffmaterial gebildet werden.

Ein Verfahren dieser Art ist bereits aus der DE 198 28 856 C1 bekannt. Die Durchführung des bekannten Verfahrens gestaltet sich insbesondere dann verhältnismäßig aufwendig, wenn Haftverschlußteile hergestellt werden stollen, bei denen die Haftverschlußelemente in sehr hoher Packungsdichte angeordnet und kleinformatig ausgebildet sind. Dies ist beispielsweise bei der Herstellung sogenannter Mikro-Haftverschlüsse der Fall, bei denen die Haftverschlußelemente in Form von Stengeln mit endseitigen Verdickungen oder seitlichen Vorsprüngen in sehr hohen Packungsdichten von beispielsweise 200 oder mehr Haftverschlußelementen pro cm² vorgesehen sind.
Um die endseitige Gestaltung der Stengel in gewünschter Weise auszubilden, sind Formwerkzeuge in der Art von Siebwalzen erforderlich. Wegen der sehr großen Anzahl der Öffnungen des Siebes, die durch Ätzen, Galvanisieren oder mittels Laserbearbeitung hergestellt werden können, ergeben sich hohe Herstellungskosten.

Ausgehend von diesem Stand der Technik stellt sich die Erfindung die Aufgabe, ein Verfahren aufzuzeigen, das eine besonders wirtschaftliche Herstellung von Haftverschlußteilen mit in hoher Packungsdichte angeordneten Haftverschlußelementen mit verschiedenartigster, jeweils gewünschter Formgebung ermöglicht.

Bei einem Verfahren der eingangs genannten Art ist diese Aufgabe erfindungsgemäß dadurch gelöst, daß zumindest ein Haftverschlußelement in zumindest einem Teilbereich formwerkzeugfrei dadurch ausgebildet wird, daß das Kunststoffmaterial mittels mindestens einer Auftragevorrichtung in aufeinanderfolgend abgegebenen Tröpfchen abgelagert wird und die Orte der Ablagerung der Tröpfchen im Hinblick auf die Form des jeweils auszubildenden Haftverschlußelementes dreidimensional gewählt werden.

Der erfindungsgemäß vorgesehene Aufbau der Haftverschlußelemente aus einzelnen, feinsten Tröpfchen, die an ausgewählten Orten nacheinander abgelagert werden, ermöglicht die Ausbildung der Haftverschlußelemente in beliebiger Gestaltung, in praktisch beliebig kleinen Formatgrößen und in den gewünscht hohen Packungsdichten, ohne daß eine entsprechend aufwendige Ausbildung von Formwerkzeugen erforderlich wäre. So lassen sich durch Steuerung der Orte der Ablagerung der Tröpfchen, was durch entsprechende Relativbewegungen zwischen Auftragevorrichtung und ein die Ablagerung tragendes Substrat, vorzugsweise rechnergesteuert, erfolgt, ohne Schwierigkeiten nicht nur die in der oben erwähnten DE 198 28 856 C1 gezeigten Formen von Haftverschlußelementen ausbilden, wie Stengel mit Pilzköpfen, mit sternförmigen Köpfen und dergleichen, sondern auch Formen, die mit üblichen Formwerkzeugen kaum oder gar nicht realisierbar wären, etwa Schlaufen, Haken oder Anker, also Formen, die wegen vorhandener Hinterschneidungen aus einem Formwerkzeug schlecht oder überhaupt nicht ausformbar wären.

Nach dem erfindungsgemäßen Verfahren lassen sich Haftverschlußteile herstellen, bei denen verschiedenartige Materialien als Trägerelement vorgesehen sein können, an dessen Oberfläche die Haftverschlußelemente hervorstehen. Mit anderen Worten gesagt, können als Substrat, auf dem die die Haftverschlußelemente bildenden Tröpfchen abgelagert werden, die für die jeweiligen, vorgesehenen Anwendungszwecke der Haftverschlußteile geeigneten Werkstoffe verwendet werden, beispielsweise Kunststoffmaterial, insbesondere in Folienform.

Bei Verwendung von Kunststoffmaterial als Trägerelement kann so vorgegangen werden, daß die Ablagerung der die Haftverschlußelemente bildenden Tröpfchen auf dem fertigen Trägerelement erfolgt. Es ist jedoch auch möglich, nicht nur die Haftverschlußelemente aus abgelagerten Tröpfchen aufzubauen, sondern auch das Trägermaterial. So kann beispielsweise in einem einzigen Fertigungszug eine das Trägerelement bildende Kunststoffolie und die daran befindlichen Haftverschlußelemente aus mittels Auftragevorrichtungen versprühten Tröpfchen aufgebaut werden.

Anstelle der Verwendung von Kunststoff als Werkstoff des Trägerelementes können textile Materialien, beispielsweise in gestrickter oder gewirkter Form, verwendet werden. Das Trägerelement braucht kein flächiger Körper zu sein. Für besondere Anwendungen können Formkörper, beispielsweise Profilkörper, als Trägerelement vorgesehen sein, an dessen Oberfläche die hervorstehenden Haftverschlußelemente mittels der betreffenden Auftragevorrichtungen ausgebildet werden.

Vorzugsweise wird eine Auftragevorrichtung mit mindestens einer Düse verwendet, aus der das Kunststoffmaterial mit einer Tröpfchengröße von wenigen Pikolitern versprüht wird. Derartige Düseneinrichtungen können für das Ausschleudern des flüssigen Kunststoffmaterials piezoelektrisch oder elektrothermisch betätigbar sein. Vorzugsweise besteht das Kunststoffmaterial aus Acrylat, das nach Ablagern jedes Tröpfchens oder einer Gruppe von Tröpfchen ausgehärtet wird, beispielsweise indem man den Ablagerungsort einer UV-Strahlung aussetzt. Das Kunststoffmaterial kann jedoch auch ein Thermoplast sein, der chemisch oder in anderer Weise ausgehärtet wird.

Der Aufbau der Haftverschlußelemente läßt sich mit hoher Arbeitsgeschwindigkeit durchführen, weil das Sprühen aufeinanderfolgender Tröpfchen mit hoher Taktgeschwindigkeit erfolgen kann. Bei rechnergesteuertem Betrieb lassen sich ohne weiteres Taktfrequenzen von mehreren Kilohertz erreichen. Auch kann eine Auftragevorrichtung mit mehreren, gleichzeitig bestätigten Düsen vorgesehen werden, um mehrere Reihen von Haftverschlußelementen gleichzeitig aufzubauen.

Nachstehend ist die Erfindung anhand von in der Zeichnung dargestellte Ausführungsbeispielen im einzelnen erläutert. Es zeigen:
- Fig. 1: eine stark schematisch vereinfachte, perspektivische Ansicht eines Ausführungsbeispieles einer Einrichtung zum Durchführen des erfindungsgemäßen Verfahrens;
- Fig. 2: eine schematisierte Seitenansicht der Einrichtung von Fig. 1;
- Fig. 3: eine vergrößerte Darstellung des in Fig. 2 mit A bezeichneten Bereiches;
- Fig. 4: eine der Fig. 2 ähnliche Seitenansicht der Einrichtung, wobei die Herstellung schlaufenartiger Haftverschlußelemente gezeigt ist;
- Fig. 5: eine vergrößerte Darstellung des in Fig. 4 mit A bezeichneten Bereiches;
- Fig. 6: eine stark schematisch vereinfacht gezeichnete Seitenansicht einer Einrichtung zur Herstellung von Haftverschtußetementen mit trogförmigen Köpfen durch Kalandern und
- Fig. 7: eine vergrößerte Darstellung des in Fig. 6 mit A bezeichneten Bereiches.

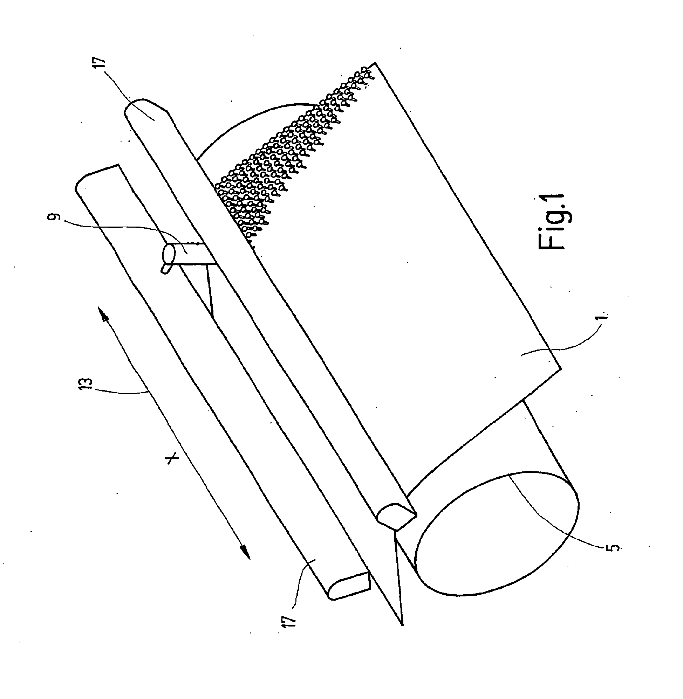

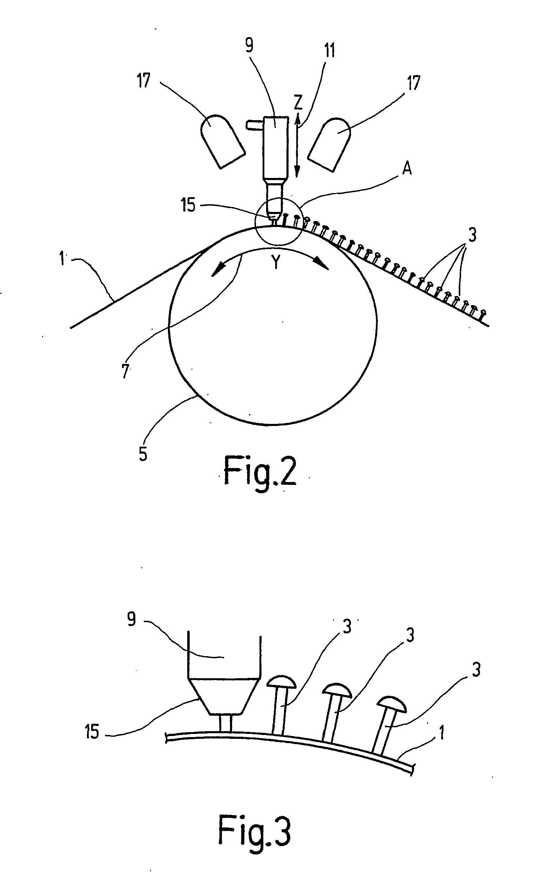

Fig. 1 bis 3 dienen zur Verdeutlichung des erfindungsgemäßen Verfahrens anhand eines Beispiels, bei dem Haftverschlußteile mit einem Trägerelement 1 in Form einer PET-Folie hergestellt werden, an deren einer Oberfläche Haftverschlußelemente 3 ausgebildet werden, die die Form von Stengeln mit endseitigen Verdickungen besitzen. Bei dem Beispiel von Fig.1 bis 3 sind die endseitigen Verdickungen pilzkopfartig, wie insbesondere aus Fig.3 zu ersehen ist. Im Interesse der Übersichtlichkeit sind die Haftverschlußelemente in sämtlichen Figuren in weit übertriebener Größe und weit übertriebenen gegenseitigen Abständen dargestellt.

Das Trägerelement 1 ist auf einer Führungswalze 5 gelagert, die für gesteuerte Drehschritte in beiden Drehrichtungen antreibbar ist, so daß das Trägerelement 1 relativ zu dem innerhalb eines Auftragebereiches A gelegenen Ablagerungsort von Tröpfchen in einer Y-Achsrichtung hin und her beweglich ist, siehe Bogenpfeil 7 von Fig.2. Die Ablagerung der Tröpfchen aus verflüssigtem Kunststoffmaterial erfolgt mittels einer Auftragevorrichtung 9, die ihrerseits in der Z-Achsrichtung, siehe Doppelpfeil 11 von Fig.2, und in der hierzu senkrechten X-Achsrichtung, siehe Doppelpfeil 13 von Fig.1, beweglich ist. Somit kann der Ort der Tröpfchenablagerung relativ zum Trägerelement 1 dreidimensional gewählt werden, indem die Führungswalze 5, und damit das Trägerelement 1, sowie die Auftragevorrichtung 9 entsprechend bewegt werden. Alternativ könnte auch die Auftragevorrichtung 9 in allen drei Achsen (X, Y und Z) relativ zum Trägerelement 1 beweglich sein.

Die Auftragevorrichtung 9 weist beim Beispiel von Fig. 1 bis 3 eine das verflüssigte Kunststoffmaterial versprühende Düse 15 auf. In dem in Fig.3 gezeigten Betriebszustand nimmt die Düse 15 relativ zum Trägerelement 1 eine solche Position ein, daß der Stengel eines Haftverschlußelementes 3 durch nacheinanderfolgendes Aufsprühen von Tröpfchen mit einem Volumen von jeweils wenigen Pikolitern aufgebaut wird. Bei dem in Fig.3 gezeigten Zustand ist der durch die Düse 15 besprühte Stengel bis etwa zu einem Drittel seiner Höhe aufgebaut. Das Sprühen der Tröpfchen erfolgt, vorzugsweise rechnergesteuert, mit einer hohen Taktfrequenz von beispielsweise 2 kHz. Zwischen den Sprühvorgängen werden die jeweils abgelagerten Tröpfchen ausgehärtet, was auf unterschiedliche Weise bewerkstelligt werden kann, beispielsweise durch Aufsprühen eines Härtemittels oder durch Energiezufuhr, insbesondere durch UV-Strahlung. Beim vorliegenden Beispiel sind neben der Auftragevorrichtung 9 UV-Lampen 17 für die Beaufschlagung des Auftragebereiches A mit UV-Strahlung angeordnet. Für die Härtevorgänge wird die Auftragevorrichtung 9 vorzugsweise in Z-Achsrichtung zurückgefahren und/oder das Trägerelement 1 durch Bewegen der Führungswalze 5 in Y-Achsrichtung verschoben, bevor für den nachfolgenden Sprühvorgang die entsprechenden Teile wieder in die dem gewählten Ort der Tröpfchenablagerung entsprechende Position zurückgebracht werden.

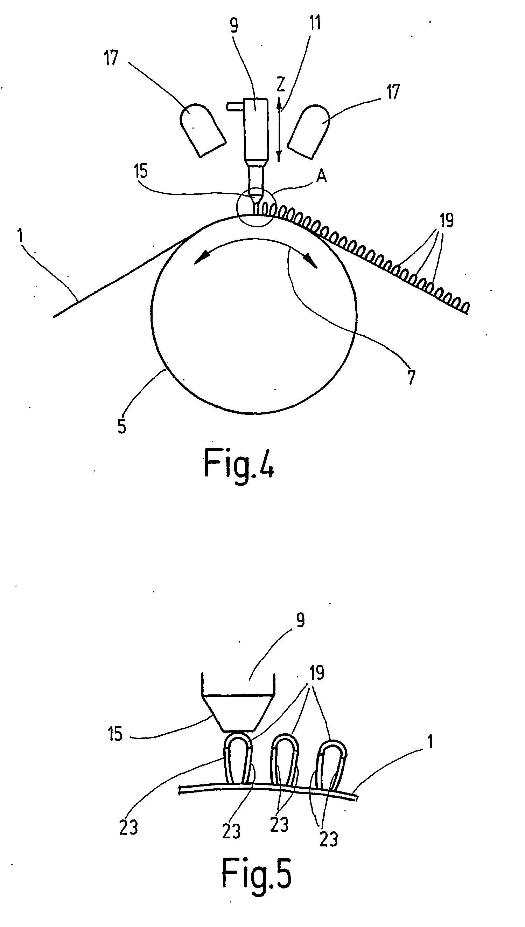

Fig.4 und 5 dienen der Verdeutlichung der Durchführung des Verfahrens zur Herstellung von Haftverschlußteilen, bei denen am Trägerelement 1 Haftverschlußelemente 19 in Schlaufenform ausgebildet werden. Hierbei wird so vorgegangen, daß zunächst für jede Schlaufe zwei Stengel 23 aufgebaut werden und diese dann jeweils bogenförmig überbrückt werden, siehe Fig.5.

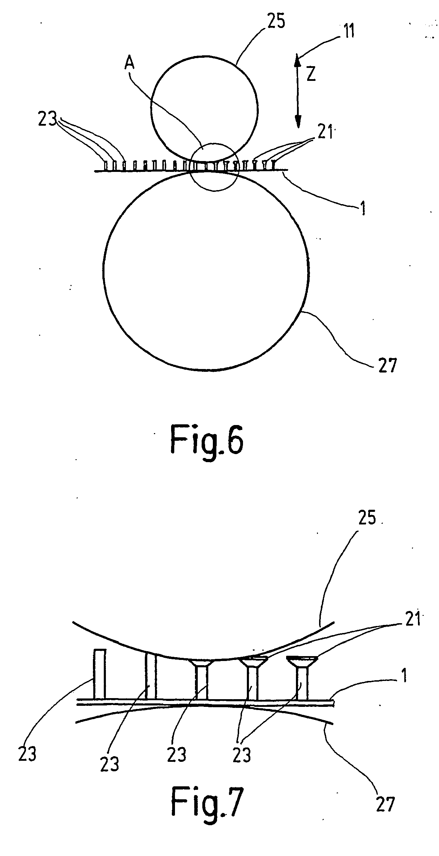

Fig.6 und 7 verdeutlichen die Herstellung von Haftverschlußteilen mit Haftverschlußelementen 21, die ausgebildet werden, indem ebenfalls zuerst Stengel 23 ohne endseitige Verdickungen aufgebaut werden. Mittels einer Kalanderwalze 25, die in Zusammenwirkung mit einer Gegenwalze 27 einen Druckspalt bildet, werden sodann an den Enden der Stengel 23 durch Kalandern die endseitigen Verdickungen der Haftverschlußelemente 21 gebildet, die, siehe Fig.7, eine trogförmige Gestalt besitzen.

Als in Tröpfchenform aufzutragendes Kunststoffmaterial eignen sich beispielsweise verflüssigte Acrylate, deren Viskosität durch Zusatz eines Reaktiv-Verdünners in gewünschter Weise eingestellt werden kann. Vorzugsweise wird durch Zugabe eines Photoinitiators die Härtbarkeit mittels UV-strahlung begünstigt.

Bei einem Beispiel enthält das Kunststoffmaterial als Acrylatwerkstoff 90% Ebecryl 4835, ein von der Firma UCB hergestelltes Prepolymer, 8 % HDDA (Firma UCB) als Reaktiv-Verdünner zur Viskositätseinstellung und 2 % Darocur 1173, hergestellt von der Firma Ciba-Geigy, als Photoinitiator.

Bei einem anderen Beispiel sind als Acrylatwerkstoffe 90% Ebecryl 4835 sowie 4 % Ebecryl 230 der Firma UCB vorgesehen. Als Reaktiv-Verdünner sind 4 % HDDA der Firma UCB und als Photoinitiator 2 % Darocur 1173 der Firma Ciba-Geigy enthalten.

Es versteht sich, daß Kunststoffmaterialien anderer Zusammensetzung zur Durchführung des erfindungsgemäßen Verfahrens anwendbar sind. Anstelle einer PET-Folie können auch andersartige Trägerelemente verwendet werden, beispielsweise textile Materialien, oder auch für spezielle Anwendungen vorgesehene Formkörper.

Vorstehend ist die Erfindung anhand von Beispielen beschrieben, bei denen die Haftverschlußelemente zur Gänze aus aufeinanderfolgend aufgesprühten Tröpfchen ausgebildet sind. Es versteht sich, daß das Verfahren mit Vorteil auch so angewendet werden kann, daß einfach geformte Stengel der Haftverschlußelemente, die, wenn es sich beispielsweise um gerade Stengel handelt, ohne besondere Aufwand auf übliche Weise durch Formwerkzeuge hergestellt werden können, als Ausgangsmaterial verwendet werden, von dem ausgehend sodann durch Aufsprühen der Tröpfchen die gewünschten Geometrien der fertigen Haftverschlußelemente ausgebildet werden.

## Patentansprüche

1. Verfahren zum Herstellen von Haftverschiußteilen, bei dem einzelne Haftverschlußelemente (3; 19; 21) aus einem Kunststoffmaterial gebildet werden, **dadurch gekennzeichnet, daß** zumindest ein Haftverschlußelement (3; 19; 21) in zumindest einem Teilbereich formwerkzeugfrei dadurch ausgebildet wird, daß das Kunststoffmaterial mittels mindestens einer Auftragevorrichtung (9) in aufeinanderfolgend abgegebenen Tröpfchen abgelagert wird und die Orte der Ablagerung der Tröpfchen im Hinblick auf die Form des jeweils auszubildenden Haftverschlußelementes (3; 19; 21) dreidimensional gewählt werden.

2. Verfahren nach Anspruch 1, **dadurch gekennzeichnet, daß** die die Haftverschlußelemente (3; 19; 21) bildenden Tröpfchen auf einem Trägerelement (1) abgelagert werden.

3. Verfahren nach Anspruch 2, **dadurch gekennzeichnet, daß** als Trägerelement (1) ein Kunststoffmaterial verwendet wird.

4. Verfahren nach Anspruch 3, **dadurch gekennzeichnet, daß** auch das Trägerelement (1), wie die Haftverschlußelemente (3; 19; 21), durch Ablagerung von durch die zumindest eine Auftragevorrichtung (9) abgegebenen Tröpfchen aufgebaut werden.

5. Verfahren nach Anspruch 4, **dadurch gekennzeichnet, daß** ein Trägerelement (1) in Form einer Folie verwendet wird.

6. Verfahren nach Anspruch 3, **dadurch gekennzeichnet, daß** als Trägerelement (1) ein textiles Material, insbesondere in gestrickter oder gewirkter Form, verwendet wird.

7. Verfahren nach Anspruch 3, **dadurch gekennzeichnet, daß** als Trägerelement ein Formkörper, insbesondere Profilkörper, verwendet wird.

8. Verfahren nach einem der Ansprüche 1 bis 7, **dadurch gekennzeichnet, daß** die Auftragevorrichtung (9) mindestens eine Düse (15) aufweist und daß das Kunststoffmaterial aus der Düse (15) der Auftragevorrichtung (9) mit einem Tröpfchenvolumen von wenigen Pikolitern versprüht wird.

9. Verfahren nach Anspruch 8, **dadurch gekennzeichnet, daß** als Kunststoffmaterial ein flüssiger Kunststoff aus der Düse (15) versprüht wird.

10. Verfahren nach Anspruch 8 oder 9, **dadurch gekennzeichnet, daß** zur dreidimensionalen Steuerung der Orte der Ablagerung der Tröpfchen sowohl das Trägerelement (1) als auch die zumindest eine Düse (15) bewegt werden.

11. Verfahren nach einem der Ansprüche 1 bis 10, **dadurch gekennzeichnet, daß** das Kunststoffmaterial nach Ablagern jedes Tröpfchens oder einer Gruppe von Tröpfchen erstarrt wird.

12. Verfahren nach Anspruch 11, **dadurch gekennzeichnet, daß** das Erstarren aufgrund von Energiezufuhr erfolgt.

13. Verfahren nach Anspruch 12, **dadurch gekennzeichnet, daß** die Energiezufuhr durch elektromagnetische Strahlung, insbesondere Ultraviolettstrahlung (UV) oder Infrarotstrahlung (IR), oder durch chemische Reaktion erfolgt.

14. Verfahren nach einem der Ansprüche 11 bis 13, **dadurch gekennzeichnet, daß** das Trägerelement (1) und/oder die Auftragevorrichtung (9) für das Erstarren in eine Lage bewegt wird bzw. werden, die zu der beim vorausgehenden Ablagern des Tröpfchens eingenommenen Lage unterschiedlich ist.

15. Verfahren nach einem der Ansprüche 11 bis 14, **dadurch gekennzeichnet, daß** das Kunststoffmaterial nach dem Erstarren eine für das Verhaken und/oder Lösen der Haftverschlußelemente (3; 19; 21) geeignete vorgebbare Flexibilität aufweist.

16. Verfahren nach einem der Ansprüche 1 bis 15, **dadurch gekennzeichnet, daß** die Tröpfchen mit einer Taktfrequenz von mehr als 50 Hertz, vorzugsweise im Kilohertz-Bereich, abgelagert werden.

## Claims

1. A method of producing adhesive closure parts wherein individual adhesive closure elements (3; 19; 21) are formed from a synthetic material, **characterised in that** at least one adhesive closure element (3; 19; 21) is formed in at least one partial region without any moulding tools **in that** the synthetic material is deposited by means of at least one application device (9) in consecutively released droplets, and the locations for depositing the droplets are chosen three-dimensionally with regard to the form of the respective adhesive closure element (3; 19; 21) to be formed.

2. The method according to Claim 1, **characterised in that** the droplets forming the adhesive closure elements (3; 19; 21) are deposited on a carrier element (1).

3. The method according to Claim 2, **characterised in that** a synthetic material is used as a carrier element (1).

4. The method according to Claim 3, **characterised in that** like the adhesive closure elements (3; 19; 21) the carrier element (1) is also built up by depositing droplets released by the at least one application device (9).

5. The method according to Claim 4, **characterised in that** a carrier element (1) in the form of a film is used.

6. The method according to Claim 3, **characterised in that** a textile material, in particular in knitted or woven form, is used as a carrier element (1).

7. The method according to Claim 3, **characterised in that** a mould, in particular a profile mould, is used as a carrier element.

8. The method according to any of Claims 1 to 7, **characterised in that** the application device (9) has at least one nozzle (15) and that the synthetic material is sprayed out of the nozzle (15) of the application device (9) with a droplet volume of a few picolitres.

9. The method according to Claim 8, **characterised in that** a liquid synthetic is sprayed out of the nozzle (15) as a synthetic material.

10. The method according to Claim 8 or 9, **characterised in that** both the carrier element (1) and the at least one nozzle (15) are moved for the three-dimensional control of the locations for depositing the droplets.

11. The method according to any of Claims 1 to 10, **characterised in that** the synthetic material is solidified after depositing each droplet or a group of droplets.

12. The method according to Claim 11, **characterised in that** the solidification is implemented upon the basis of an energy input.

13. The method according to Claim 12, **characterised in that** the energy input is implemented by means of electromagnetic radiation, in particular ultraviolet radiation (UV) or infrared radiation (IR), or by chemical reaction.

14. The method according to any of Claims 11 to 13, **characterised in that** for solidification the carrier element (1) and/or the application device (9) is/are moved into a position which is different to the position adopted during the preceding depositing of the droplet.

15. The method according to any of Claims 11 to 14, **characterised in that** after solidification the synthetic material has a pre-specifiable flexibility suitable for catching and/or releasing the adhesive closure elements (3; 19; 21).

16. The method according to any of Claims 1 to 15, **characterised in that** the droplets are deposited with a clock frequency of more than 50 hertz, preferably in the kilohertz range.

## Revendications

1. Procédé de fabrication de pièces de fermeture auto-agrippante, dans lequel on forme des éléments (3, 19, 21) individuels de fermeture auto-agrippante en une matière plastique, **caractérisé en ce que** l'on forme sans outil de moulage au moins un élément (3, 19, 21) de fermeture auto-agrippante dans au moins une région partielle, en déposant la matière plastique au moyen d'un dispositif (9) de dépôt en des gouttes lâchées successivement et l'on choisit en trois dimensions la position du dépôt des gouttes en tenant compte de la forme de l'élément (3, 19, 21) de fermeture auto-agrippante à former respectivement.

2. Procédé suivant la revendication 1, **caractérisé en ce que** l'on dépose les gouttes formant les éléments (3, 19, 21) de fermeture auto-agrippante sur un élément (1) de support.

3. Procédé suivant la revendication 2, **caractérisé en ce que** l'on utilise comme élément (1) de support une matière plastique.

4. Procédé suivant la revendication 3, **caractérisé en ce que** l'on forme aussi l'élément (1) de support comme les éléments (3, 19, 21) de fermeture auto-agrippante par dépôt de gouttes lâchées par le au moins un dispositif (9) de dépôt.

5. Procédé suivant la revendication 4, **caractérisé en ce que** l'on utilise un élément (1) de support sous la forme d'une feuille.

6. Procédé suivant la revendication 3, **caractérisé en ce que** l'on utilise comme élément (1) de support une matière textile, notamment une forme tricotée ou à mailles.

7. Procédé suivant la revendication 3, **caractérisé en ce que** l'on utilise comme élément de support une pièce moulée, notamment une pièce profilée.

8. Procédé suivant l'une quelconque des revendications 1 à 7, **caractérisé en ce que** le dispositif (9) de dépôt a au moins une buse (15) et **en ce que** la matière plastique est pulvérisée de la buse (15) du dispositif (9) de support en ayant un volume de gouttes de quelques picolitres.

9. Procédé suivant la revendication 8, **caractérisé en ce que** l'on pulvérise de la buse, comme matière plastique, une matière plastique liquide.

10. Procédé suivant la revendication 8 ou 9,
**caractérisé en ce que**, pour le réglage en trois dimensions de l'emplacement du dépôt des gouttes, on déplace à la fois l'élément (1) de support et la au moins une buse (15).

11. Procédé suivant l'une des revendications 1 à 10, **caractérisé en ce que** l'on solidifie la matière plastique après le dépôt de chaque goutte ou d'un groupe de gouttes.

12. Procédé suivant la revendication 11, **caractérisé en ce que** l'on effectue la solidification par apport d'énergie.

13. Procédé suivant la revendication 12, **caractérisé en ce que** l'on effectue l'apport d'énergie par du rayonnement électromagnétique, notamment par du rayonnement ultraviolet UV ou par du rayonnement infrarouge IR ou par une réaction chimique.

14. Procédé suivant l'une des revendications 11 à 13, **caractérisé en ce que** l'élément (1) de support et/ou le dispositif (9) de dépôt pour la solidification est déplacé ou sont déplacés dans une position qui est différente de la position prise lors du dépôt précédent des gouttes.

15. Procédé suivant l'une des revendications 11 à 14, **caractérisé en ce que** la matière plastique a, après la solidification, une souplesse pouvant être prescrite de manière appropriée pour l'accrochage et/ou le décrochage des éléments (3, 19, 21) de fermeture auto- agrippante.

16. Procédé suivant la revendication 1 à 15, **caractérisé en ce que** l'on dépose les gouttes à une fréquence cadencée de plus de 50 hertz, de préférence de l'ordre du kilo hertz.
